# EUROPEAN PATENT SPECIFICATION

(11) **EP 1 999 890 B1**
(45) Date of publication and mention of the grant of the patent: **30.08.2017**
(21) Application number: 06786147.6
(22) Date of filing: 30.06.2006
(51) Int. Cl.: H04L 12/24, H04L 12/26

(54) **AUTOMATED NETWORK CONGESTION AND TROUBLE LOCATOR AND CORRECTOR**
AUTOMATISIERTES NETZÜBERLAST- UND -STÖRUNGSLOKALISIER- UND -KORREKTURSYSTEM
LOCALISATEUR ET CORRECTEUR AUTOMATISÉS D'ENCOMBREMENTS ET DE DÉRANGEMENTS DU RÉSEAU

(30) Priority: 22.03.2006 US 784871 P
(43) Date of publication of application: 10.12.2008
(73) Proprietor: Ciena Luxembourg S.a.r.l., 2220 Luxembourg (LU)
(72) Inventor: TESTER, Walter, S., San Francisco, California 94132 (US); ANSARI, Zubair, Santa Clara, California 95051 (US); GHOSH, Parama, Santa Clara, California 95054 (US); LI, Jenny, Santa Clara, California 95054 (US); PALAPARTHI, Ravishankar, San Jose, California 95121 (US)
(74) Representative: Mabey, Katherine Frances
(86) International application number: PCT/US2006/025859
(87) International publication number: WO 2007/108816

(56) References cited:
- EP-A- 1 542 394
- WO-A-2004/056047
- US-A- 6 026 075
- US-A- 6 148 338
- US-B1- 6 831 895

## Description

### CROSS-REFERENCE TO RELATED APPLICATIONS

This application claims priority under 35 USC 119(e) to United States provisional Application Serial No. 60/784,871 filed on March 22, 2006, and which is incorporated herein by reference.

### TECHNICAL FIELD

The present invention relates generally to communications networks, and more particularly to an automated network congestion and trouble locator.

### BACKGROUND

In a managed communications network, once a network administrator is notified of a problem (usually a "symptom" of a problem, such as a user notifying the administrator that he/she cannot access a database or internet access is slow), he/she generally performs manual tasks to fix the problem. This may include manually configuring the network and/or specific devices within the network. In addition, there is no easy way to locate the source of a problem, such as congestion, in the network.

Accordingly, there is a need for an automated network congestion and trouble locator that can automatically locate problems (or symptoms of problems) in the network and identify the actual root cause of those problems or symptoms. Once identified, further action may be taken to eliminate or mitigate the problem(s).

### SUMMARY

In accordance with one embodiment, there is provided an automated network congestion and trouble locating method for use in a network. The method includes receiving an event notification from a device in a network, the event notification indicative of a problem in the network. A network flow information database storing network flow information about the network is queried and the queried network flow information is received. The received network flow information is processed and a congested link is identified in the network. In response to identifying the congested link, the method further includes examining the received network flow information and a previously determined topology mapping of the network and identifying a host causing the problem in the network.

In accordance with another embodiment of the present invention, there is provided a computer program embodied on a computer readable medium and operable to be executed by a processor within a processing system, the computer program comprising computer readable program code for performing the method described above.

In yet another embodiment, there is provided a processing system coupled to a network for detecting and correcting a problem in the network. The processing system includes a processor operable to: receive an event notification from a device in a network; the event notification indicative of a problem in the network; send a query to a network flow information database storing network flow information about the network; receive the queried network flow information; process the received network flow information and identifying a congested link in the network; and in response to identifying the congested link, examine the received network flow information and a previously determined topology mapping of the network and identifying a host causing the problem in the network.

Other technical features may be readily apparent to one skilled in the art from the following figures, descriptions, and claims.

### BRIEF DESCRIPTION OF THE DRAWINGS

For a more complete understanding of the present invention, and the advantages thereof, reference is now made to the following descriptions taken in conjunction with the accompanying drawings, wherein like numbers designate like objects, and in which:
FIGURE 1 illustrates an example communications network and or system in which the automated network congestion and trouble location method of the present invention may be utilized in accordance with the present invention;
FIGURE 2 depicts one example embodiment of a network or system in accordance with the present invention; and
FIGURE 3 illustrates a flow diagram corresponding to one process performed within the network shown in FIGURE 2.

### DETAILED DESCRIPTION

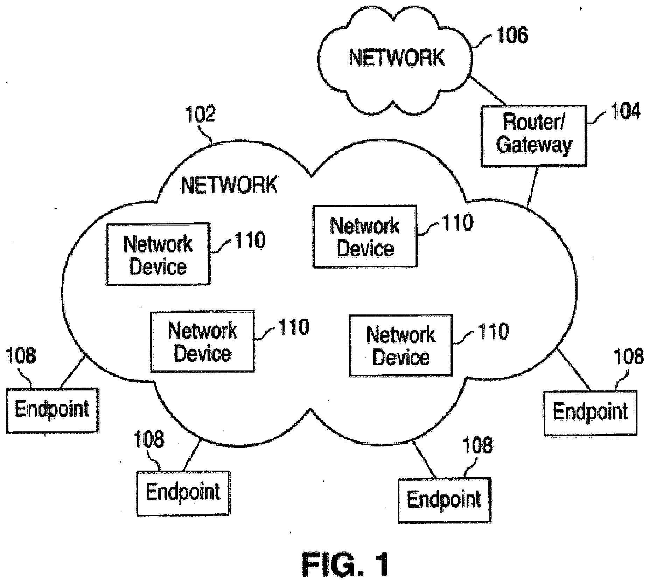

FIGURE 1 illustrates an example communications network architecture or system 100 illustrating an example network in which the automated network congestion and trouble location method of the present invention may be utilized. The system or network 100 shown in FIGURE 1 is for illustration purposes only. Other embodiments of the network system 100 may be used without departing from the scope of this disclosure.

In this example, the network system 100 includes a data network 102, a network router/gateway 104, and public or other communications network 106. The networks 102 and 106 are interconnected via the router/gateway 104. Additional routers/gateways (or other devices providing a gateway function) and/or networks similar to the router/gateway 104 and the network 106 may be included with the network system 100, but are not shown for brevity. The devices in the system 100 are interconnected or coupled (communicatively) via various communications lines (wire or wireless) within the system 100.

The networks 102 and 106 may further include one or more local area networks ("LAN"), metropolitan area networks ("MAN"), wide area networks ("WAN"), including cluster or server area networks, all or portions of a global network such as the Internet, or any other communication system or systems at one or more locations, or combination of these. Further, the network 102, 106 (and system 100) may include various servers, routers, bridges, and other access and backbone devices. In one embodiment, the network 102 is a packet network that utilizes any suitable protocol or protocols, and in a specific embodiment, the network 102 (and most components connected thereto) operates in accordance with the Internet Protocol (IP). As will be appreciated, the concepts and teachings of the present invention are not limited to IP, but may be utilized in any data packet network that facilitates communication between components of the data network 102 (or within system 100), including Internet Protocol ("IP") packets, frame relay frames, Asynchronous Transfer Mode ("ATM") cells, or other data packet protocols, and which may be used with or on any L2 transport.

As will be appreciated, other components and networks may be included in the system 100, and FIGURE 1 only illustrates but one exemplary configuration to assist in describing the operation of the present invention to those skilled in the art.

Coupled to the network 102, and which generally form a part of the network 102, are a plurality of endpoint devices or end devices 108 (communications devices). The endpoint devices 108 represent devices utilized by users or subscribers during communication sessions over/within the system 100. For example, the endpoint devices 108 may communicate with other endpoint devices 108, as well as other network devices 110 (such as servers and applications providing various functionality, e.g., engines, databases, data and service applications, business tools, etc.) in the network. In addition, the endpoint devices may include an input/output device having a microphone and speaker to capture and play audio information. Optionally, they may also include a camera and/or a display to capture and play video information. The endpoint devices 108 are able to communicate with each other (and/or other devices 110 connected to the networks 102 and 106) through the system 100.

Each of the endpoint devices 108 (or communication devices) may be constructed or configured from any suitable hardware, software, firmware, or combination thereof for transmitting or receiving information over a network. As an example, the endpoint devices 108 could represent telephones, videophones, computers, personal digital assistants, remote storage systems, servers, and the like, etc.

The network 102 includes a plurality of network devices 110, which may include devices such as call and applications servers, firewalls, routers, hubs, switches, network management devices, and the like (providing various functionality within the network 102). These network devices 110 generally will include one or more controllers or processors, memory, logic circuitry, and interfacing circuitry to interface within the network 102, and software and/or firmware.

As will be appreciated, the network 102 may also be referred to or understood as a separately managed network.

The endpoint devices 108 are coupled to the network 102. In this document, the term "couple" and its derivatives refer to any direct or indirect communication between two or more elements, whether or not those elements are in physical contact with one another. The gateway 104 facilitates communication between the networks 102 and 106.

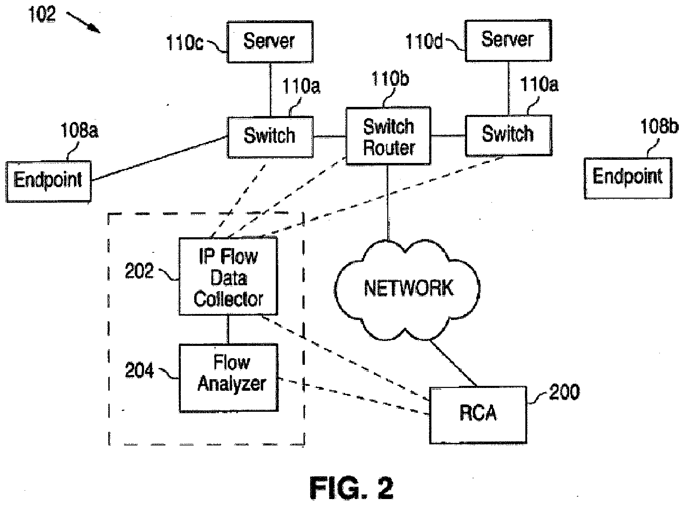

Now referring to FIGURE 2, the network 102 is illustrated with endpoints 108 and network devices 110. The network 102 also includes a root cause analysis processor or server 200, an IP flow data collector 202 and a network traffic analyzer 204. These devices are coupled to the network 102 and may form part of the network 102. The endpoints 108 may also be considered to be network devices.

In the illustrative embodiment shown in FIGURE 2, the network devices 110 include one or more switches 110a, a router switch 110b, a database server 110c and an applications server 110d. Two endpoints 108a, 108b are shown. The switches 110a may be in the form of routers, hubs or L3 switches, etc.

The IP flow data collector 202 is configured to obtain information about data and traffic flow in the network 102. This flow information may include source and destination addresses, protocol and application information, numbers of bytes, packets and flows. Additional information, such as direction of traffic flow (which nodes) and traffic variances by time, may be determined from the flow information. Such information is commonly known to those skilled in the art under the name or designation Internet Protocol Flow Information eXport (IPFIX) information, also known as IP Flow, and/or NETFLOW, hereinafter generically referred to as "network flow information" or "flow information" and the IP flow data collector may be referred to as a "network flow data collector."

Network flow information is retrieved or obtained from one or more of the network devices 110. In FIGURE 2, the dotted lines illustrate the logical path/flow of the network flow information between the IP flow data collector 202 and the routers and switches 110a, 110b.

The network flow analyzer 204 receives the network flow information from the IP flow data collector 202 and performs various analyses on the data. The analyzer 204 may provide capacity planning, troubleshooting and other traffic analysis functions (one device suitable for use as the network flow analyzer is a device provided by NetQoS, Inc. under the name "NetQoS ReporterAnalyzer").

The IP flow data collector 202 may include any suitable hardware, software, firmware, or combination thereof for performing the desired function of obtaining and collecting network flow information. It may also perform some analysis of the network flow information. More than one may be provided. It will be understood that the data collector 202 may a physically separate device or may be logically shown (it may form part of the network device(s) 110 from which the data is collected or obtained).

In alternative embodiments, the analyzer 204 and data collector 202 may be combined into a single device, and/or the RCA (described hereinafter) 200, data collector 204 and the analyzer 204 may be combined into a single device. Optionally, the analyzer 204 may be omitted and the RCA processor 200 may obtain network flow information from the data collector 202. Other configurations are contemplated.

The RCA 200 generally includes one or more controllers or processors, memory, logic circuitry, and interfacing circuitry to interface within the network 102, and software operable for performing the functions described herein. In one embodiment, the RCA 200 includes one or more input/output devices, such as a keyboard, mouse, video display, etc. Thus, the RCA 20 may be a PC, server device or network appliance.

Network flow information (e.g, IPFIX data) has been historically used to analyze the network from a capacity planning perspective or provide basic information on data flows (e.g., amount of data per type of protocols/applications/services, by time periods such as hours, days, etc.). This long-term trending and statistical information would help identify where potential congestion might arise over time in an area of the network. As a result, a system administrator would usually respond by planning (and then adding) new hardware to preempt anticipated congestion.

One aspect of the present invention applies root cause analysis logic to network flow information (e.g. IPFIX data) to analyze traffic on a network, and in the event of trouble (e.g., congestion, failures, security issues, etc.) locate the problem traffic and the offending endpoint or host (or node or user) via data-mining (of the network flow information) and network topology/discovery. Based on the analysis and determination, action(s) are initiated and taken correct or solve the problem. Such action may range from taking no action at all up to blocking all traffic from a given host (or coupled pair of hosts) or subnet or traffic type (e.g., web, FTP, mail, etc.).

The application of corrective action may also be dependent on the policies, procedures and rules configured for the network. For instance, some hosts may be allowed to overload the network under certain conditions, but others may not. For example, a large video file transfer from an important person within the network (such as a CEO) may be permitted even if it is disrupting a group of users running a database application.

The automated network congestion and trouble location method and apparatus of the present invention which provides a network and systems management tool also automates certain tasks normally done manually. Data is gathered from multiple sources and combined with a self-learned network topology to locate and isolate network trouble. Problem-resolution logic is provided for determining that some detected problems/issues/events (i.e., trouble/event notifications) are caused by other problems/issues/events and automatically finding the underlying root-cause problem/issue/event. A solution may be automatically applied in many instances to resolve or correct it.

The following provides a high-level description of a method in accordance with one embodiment of the present invention.

One or more event notifications are received from one or more devices in the network. It is typical a network problem may generate multiple event notifications. Data about the event enters the system. Related events are correlated and only truly disparate events are identified as problems. RCA logic is applied to each event grouping to determine the root cause. A solution is identified to correct or mitigate the root event and the solution is applied.

When a problem (or symptom of a problem) is detected, an event notification is generated. Event notifications may take any form, including an SNMP trap, query, or other notification generated from a source within the network. Event notifications, depending on type, may be triggered when some threshold is reached in the network. Thresholds in the network (or network device(s)) may be set by the system administrator. The event notifications may also be as simple as a message that a given device is having difficulty with a service or communications.

At various times, the RCA 200 scans the network 102 discovering network devices/elements/links and creates a mapping of the network topology. This mapping is cross-referenced to the network flow information (e.g., IPFIX) and may be displayed by the RCA 200. A graphical user interface (GUI) (not shown) may be provided to display the network topology mapping.

It will be understood that one or more network devices 110 continuously report network flow information (e.g., IPFIX data) to the data collector 202. The data collector 202 captures and stores this information in a database or other memory.

Upon receipt of the event notification(s) and correlation/filtering of the events, the RCA queries the data collector 202 for network flow information about the network 102. The RCA 200 combines the returned network flow information with the previously mapped network topology with the correlated events detections and determines the problem link and/or source/destination device. Thus, the network flow information from the data collector 202 is taken into account with the previously gathered topology data to identify the culprit, its impact, and its location in the network. The RCA 200 additionally is operable for determining the impact(s) of congestion based on the network configuration. Further, the offending host(s) may be visually displayed in conjunction with the topology mapping.

Based on this information and the configuration of the network 102, a solution to the problem may be automatically applied by modifying the network configuration.

The present invention solves the problems for intentional bad hosts (e.g., a hacker on the net) and for unintentional bad hosts (e.g., file sharing over a financial wire by people not meaning to cause any problems) by automatically identifying the offending host(s), locating the offending hosts in the network topology, allowing the system administrator to see the offending host(s) on a GUI showing their placement in the network alongside the impacts it/they are having, and optionally automatically taking action to correct or mitigate the problem.

The RCA 200 and associated method is capable of detecting the congestion/problem in the network 102 and locating the host(s) responsible for the congestion/problem. In the event there is more than one offending host, separate hosts and their impacts and the relative severity of each may be identified. For example, two groups of people may be sharing files with others but one may be using more bandwidth then the other or one may be taking bandwidth over a more critical or smaller pipe.

In conventional systems, once a network administrator is notified of a problem, he/she has to fix it, typically involving manual tasks which can take time. Sometimes, these tasks are wasted or unfruitful since network conditions may change quickly such that the problem may not be present before the administrator has time to solve it (e.g., in case of a file-sharing problem, the copying may be completed before the administrator has time discover it). Even as little as a minute or so can be disastrous for some networks such as those carrying phone calls as people will generally hang up after only a few seconds of poor voice quality.

The present invention not only automates the process for the system administrator by pinpointing the problem in the network topology allowing for immediate "identification" of the culprit and "push-button" problem resolution, but can automatically choose the resolution and apply it without involving the administrator (i.e., for devices managed by an enterprise policy manager). A pop-up or email may be used to notify the administrator the problem occurred and was resolved. This may also include sending out a text message to a pager or other hand-held device carried by the administrator.

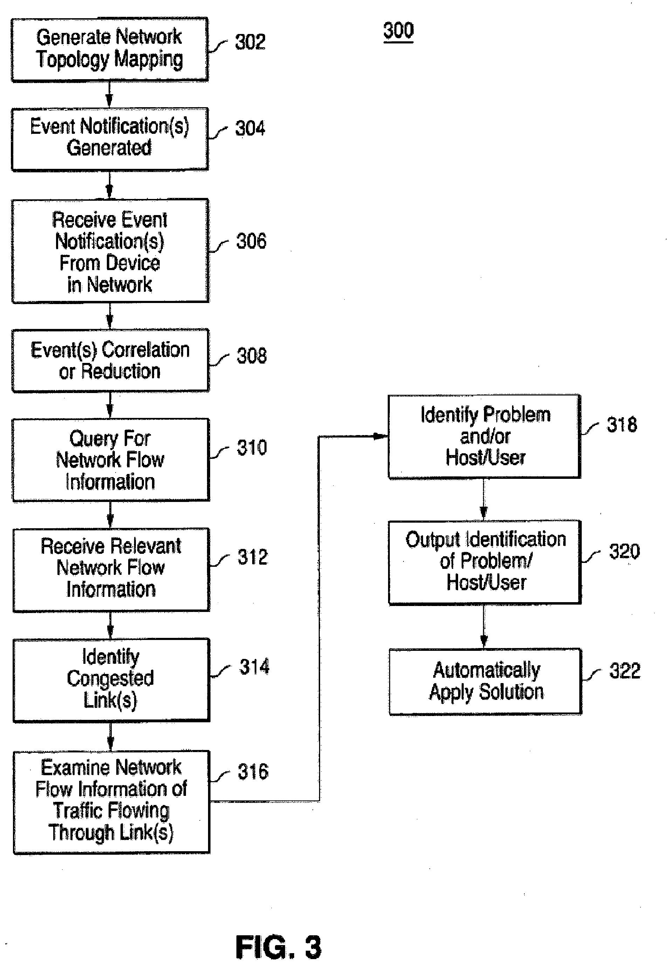

Now referring to FIGURE 3, there is illustrated a process 300 in accordance with one embodiment of the present invention.

The network 102 is scanned by the RCA 200 and a topology mapping of the network 102 is generated (step 302). Once initially generated, the topology mapping is usually updated periodically. This may be done using a suitable algorithm or method for discovery of devices in a network, as is generally known to those skilled in the art.

One or more event notifications (or fault data) are generated within the network 102 (step 304) in response to a problem (or symptoms of a problem) occurring in the network 102. The event notifications indicate that a problem (or symptom) is detected in the network, which alerts the RCA processor 200 (or other device in the network). The RCA processor 200 receives these event notification(s) directly from a source network device or via other devices. Examples of common event notifications may include SNMP traps and remote Syslog events, as well as event notifications from the network flow analyzer 204 (e.g., high network traffic on link) or from one of the network devices 110 (such as an application server). SNMP traps are generic and include those related to cold start, warm start, link up, link down, etc. or they may be enterprise specific using enterprise MIBs to generate traps for any desired event notification. Specific examples may include bandwidth usage exceeding a threshold and application server latency or response time outs, though any event notifications may be utilized as desired.

Upon receipt of event notification(s), the RCA processor 200 engages in, what is referred to as "event reduction," to correlate related event notification(s) (step 308). Related events are grouped together and these dependent events are narrowed down or resolved to a single or few primary events. For example, if a given problem arises in the network 102, it is possible that ten or fifteen (or even hundreds) of event notifications may be generated and received as result. Instead of resolving each event notification individually, the RCA processor 200 correlates/relates these events and identifies them as being originated due to a main or single problem. This correlation is based on trace routing or path tracing. Path tracing is defined as determining the path through the network for traffic from one device to another. Basically, a list of devices is generated linking the starting point with the end point. There are two types of path traces (and hybrid combinations of these two). A live path trace scans through the devices looking at their registries/MIB data or other information to determine the next device in the path until the end point is reached. A database path trace looks at the topology stored in the system to determine the logical rout the path would likely take. The latter takes much less time to perform. In other words, the RCA processor 200 includes problem-resolution logic for determining that some event notifications are a by-product of either a single event or other event notifications (perhaps from more important events/notifications or issues). In one embodiment, the correlation uses path tracing.

Once narrowed down to a detected bona-fide problem, the RCA 200 processor queries the data collector 202 for stored network flow information (e.g., IPFIX data) (step 310), and the relevant network flow information is transmitted back to the RCA processor 200 (step 312). This network flow information provides a snapshot of the network traffic for a given time period (usually for a time period before and after when the event notification(s) were generated).

The previously generated network topology mapping is combined with the received network flow information to identify the problem traffic within the network 102. One or more congested links in the network 102 are identified (step 314). Next, the network flow information, such as type of traffic, source and destination addresses, etc., corresponding to the traffic flowing through the identified link(s) is examined (step 316).

This information is processed by the RCA processor 200, and the problem, or the host(s) causing the problem, is identified (step 318). Thus, the overall process combines event notification information, network topology mapping information, and network flow information (e.g., IPFIX data) to determine and identify a problem in the network 102 and the identity of a host (or hosts) causing the problem. In the event the system correlated a substantial number of events into more than one root event, then the process would be done for each root event.

Based on this information, the RCA processor 200 may output information (such as on a display of the RCA processor 200) identifying the problematic host (e.g., user, device, etc.) (step 320) or automatically applying a solution or taking some corrective action (step 322), or doing both. Such identification may include providing a visual display of the network topology (or relevant portion thereof) and showing the problem host thereon. Automatically applying the solution generally includes initiating an activity or action to be performed by one or more of the network devices 110 (or endpoints 108). These solutions/actions may include, but are not limited to, restricting/blocking all traffic to/from a host(s), restricting/ blocking all traffic between a pair (or more) of hosts, restricting/blocking traffic of a certain type, modifying policies on routers to re-route traffic around congestion, restricting/blocking access to a user(s) on a device(s), changing priorities of protocols in the network, lowering bandwidth for the host, modifying network parameters, restricting operation of the host within the network, etc. Upon automatic application, the administrator may receive an email or pop-up message informing that a problem occurred and a solution was applied (i.e., the problem was resolved). Optionally, a text message may be sent to a pager or other hand-held device of the administrator.

If step 322 is performed, the administrator may manually input instructions to the RCA processor 200 (or other device) to take corrective action or the RCA processor may automatically apply. Alternatively, the step 324 may simply be performed.

Optionally, once the problem is identified, the RCA processor 200 may determine a possible resolution or action that may be taken. If only a single action is possible, steps 320 and/or 322 are taken, as described above. If multiple solution actions are possible, the RCA logic may select one solution or multiple solutions, and apply them, as desired. Optionally, the administrator may be notified of the possible choices and allow him/her to choose one or more (or opt to do something else and/or take some manual action).

The present method and apparatus is operable to identify intentional hackers and unintentional misuse by authorized users, detect congestion automatically, determine impact(s) of congestion on the network configuration, and visualize offending host(s) on topology mapping.

In some embodiments, the functions of some or all of the automated network congestion and trouble locating method is implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory.

It may be advantageous to set forth definitions of certain words and phrases used throughout this patent document. The terms "include" and "comprise," as well as derivatives thereof, mean inclusion without limitation. The term "or" is inclusive, meaning and/or. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

While this disclosure has described certain embodiments and generally associated methods, alterations and permutations of these embodiments and methods will be apparent to those skilled in the art. Accordingly, the above description does not define or constrain this disclosure. Other changes, substitutions, and alterations are also possible without departing from the spirit and scope of this disclosure, as defined by the following claims.

## Claims

1. An automated network congestion and trouble locating method for use in a network (102), the method comprising:
receiving an event notification from a device in a network, the event notification indicative of a problem in the network (304);
querying a network flow information database storing network flow information about the network (310);
receiving the queried network flow information (312);
processing the received network flow information and identifying a congested link in the network (314); and
**characterised in that** the method further comprises:
in response to identifying the congested link, examining the received network flow information and a previously determined topology mapping of the network (316), automatically identifying a host causing the problem in the network (318), and automatically initiating an action to be performed to correct the problem, the action comprising restricting operation of the identified host within the network.

2. The method of claim 1 comprising restricting or blocking all traffic to or from the host, or between a pair of hosts, and/or lowering bandwidth for the host.

3. The method in accordance with Claim 1 or 2 further comprising: receiving a plurality of event notifications from one or more devices in the network over a predetermined time period.

4. The method in accordance with Claim 3 further comprising: correlating the plurality of event notifications and determining a root cause event responsible for generation of the plurality of event notifications.

5. The method in accordance with Claim 4 wherein the correlating further comprises path tracing.

6. The method in accordance with any preceding claim further comprising: displaying the previously determined topology mapping and the identified host within the displayed topology mapping (320).

7. The method in accordance with any preceding claim wherein the network flow information comprises a one of IPFIX data and NETFLOW data.

8. A computer program embodied on a computer readable medium and operable to be executed by a processor within a device, the computer program comprising computer readable program code for:
receiving an event notification from a device in a network (102), the event notification indicative of a problem in the network (304);
sending a query to a network flow information database storing network flow information about the network (310);
receiving the queried network flow information (312);
processing the received network flow information and identifying a congested link in the network (314); and
**characterised in that** the computer program further comprises computer readable program code for, in response to identifying the congested link, examining the received network flow information and a previously determined topology mapping of the network (316), and automatically identifying a host causing the problem in the network (318), wherein the computer readable program code is further operable to automatically initiate an action to be performed to correct the problem (322), the computer readable program code being configured to restrict operation of the identified host within the network.

9. The computer program of Claim 8 wherein the computer readable program is operable to restrict or block all traffic to or from the host, or between a pair of hosts, and/or to lower a bandwidth for the host.

10. The computer program in accordance with Claim 8 or 9 wherein the computer readable program code is further operable for: receiving a plurality of event notifications from one or more devices in the network over a predetermined time period.

11. The computer program in accordance with Claim 10 wherein the computer readable program is further operable for: correlating the plurality of event notifications and determining a root cause event responsible for generation of the plurality of event notifications.

12. The computer program in accordance with Claim 8, 9, 10 or 11 wherein the computer readable program code is further operable for: displaying the previously determined topology mapping and the identified host within the displayed topology mapping (320).

13. A processing system coupled to a network for detecting and correcting a problem in the network, the processing system comprising a processor, the processor operable to:
receive an event notification from a device in a network (102), the event notification indicative of a problem in the network (304);
send a query to a network flow information database storing network flow information about the network (310);
receive the queried network flow information (312);
process the received network flow information and identify a congested link in the network (314); and
**characterised in that** the processor is operable to, in response to identifying the congested link, examine the received network flow information and a previously determined topology mapping of the network (316), and automatically identify a host causing the problem in the network (318);
the processor further being operable to automatically initiate an action to be peformed to correct the problem (322), the computer readable code being configured to restrict operation of the identified host within the network.

14. The processing system of Claim 13 wherein the processor is operable to restrict or block all traffic to or form the host or between a pair of hosts, and/or to lower a bandwidth for the host.

## Patentansprüche

1. Verfahren zum automatisierten Lokalisieren von Netzwerküberlastungen und - problemen zur Verwendung in einem Netzwerk (102), das Verfahren umfassend:
Empfangen einer Ereignisbenachrichtigung von einer Einrichtung in einem Netzwerk, wobei die Ereignisbenachrichtigung für ein Problem in dem Netzwerk bezeichnend ist (304);
Abfragen einer Netzwerkflussinformationsdatenbank, in der Netzwerkflussinformationen über das Netzwerk gespeichert sind (310);
Empfangen der abgefragten Netzwerkflussinformationen (312);
Verarbeiten der empfangenen Netzwerkflussinformationen und Identifizieren eines überlasteten Übertragungsabschnitts im Netzwerk (314); und
**dadurch gekennzeichnet, dass** das Verfahren ferner umfasst:
als Reaktion auf das Identifizieren des überlasteten Übertragungsabschnitts, Untersuchen der empfangenen Netzwerkflussinformationen und einer zuvor bestimmten Topologiekartierung des Netzwerks (316); automatisches Identifizieren eines Hosts, der das Problem in dem Netzwerk verursacht (318); und automatisches Einleiten einer zum Korrigieren des Problems durchzuführenden Aktion, wobei die Aktion das Einschränken des Betriebs des identifizierten Hosts in dem Netzwerk umfasst.

2. Verfahren nach Anspruch 1, umfassend: Einschränken oder Blockieren allen Datenverkehrs an den oder von dem Host oder zwischen einem Paar Hosts und/oder Absenken einer Bandbreite für den Host.

3. Verfahren nach Anspruch 1 oder 2, ferner umfassend: Empfangen mehrerer Ereignisbenachrichtigungen von einer oder mehreren Einrichtungen in dem Netzwerk über eine vorbestimmte Zeitdauer.

4. Verfahren nach Anspruch 3, ferner umfassend: Korrelieren der mehreren Ereignisbenachrichtigungen und Bestimmen eines ursprünglichen ursächlichen Ereignisses, das für die Erzeugung der mehreren Ereignisbenachrichtigungen verantwortlich ist.

5. Verfahren nach Anspruch 4, wobei das Korrelieren ferner ein Wegesuchen umfasst.

6. Verfahren nach einem der vorhergehenden Ansprüche, ferner umfassend:
Anzeigen der zuvor bestimmten Topologiekartierung und des identifizierten Hosts innerhalb der angezeigten Topologiekartierung (320).

7. Verfahren nach einem der vorhergehenden Ansprüche, wobei die Netzwerkflussinformationen entweder IPFIX-Daten oder NETFLOW-Daten umfassen.

8. Computerprogramm, das auf einem computerlesbaren Medium ausgeführt ist und dergestalt betreibbar ist, dass es von einem Prozessor in einer Einrichtung auszuführen ist, wobei das Computerprogramm computerlesbaren Programmcode umfasst zum:
Empfangen einer Ereignisbenachrichtigung von einer Einrichtung in einem Netzwerk (102), wobei die Ereignisbenachrichtigung für ein Problem in dem Netzwerk bezeichnend ist (304);
Senden einer Abfrage an eine Netzwerkflussinformationsdatenbank, in der Netzwerkflussinformationen über das Netzwerk gespeichert sind (310);
Empfangen der abgefragten Netzwerkflussinformationen (312);
Verarbeiten der empfangenen Netzwerkflussinformationen und Identifizieren eines überlasteten Übertragungsabschnitts im Netzwerk (314); und
**dadurch gekennzeichnet, dass** das Computerprogramm ferner computerlesbaren Programmcode umfasst zum, als Reaktion auf das Identifizieren des überlasteten Übertragungsabschnitts, Untersuchen der empfangenen Netzwerkflussinformationen und einer zuvor bestimmten Topologiekartierung des Netzwerks (316) und automatischen Identifizieren eines Hosts, der das Problem in dem Netzwerk verursacht (318), wobei der Computerprogrammcode ferner dazu betreibbar ist, eine zum Korrigieren des Problems durchzuführende Aktion automatisch einzuleiten (322), wobei der Computerprogrammcode dazu eingerichtet ist, den Betrieb des identifizierten Hosts in dem Netzwerk einzuschränken.

9. Computerprogramm nach Anspruch 8, wobei das computerlesbare Programm dazu betreibbar ist, allen Datenverkehr an den oder von dem Host oder zwischen einem Paar Hosts einzuschränken oder zu blockieren und/oder eine Bandbreite für den Host abzusenken.

10. Computerprogramm nach Anspruch 8 oder 9, wobei der computerlesbare Programmcode ferner betreibbar ist zum Empfangen mehrerer Ereignisbenachrichtigungen von einer oder mehreren Einrichtungen im Netzwerk über eine vorbestimmte Zeitdauer.

11. Computerprogramm nach Anspruch 10, wobei das computerlesbare Programm ferner betreibbar ist zum Korrelieren der mehreren Ereignisbenachrichtigungen und Bestimmen eines ursprünglichen ursächlichen Ereignisses, das für die Erzeugung der mehreren Ereignisbenachrichtigungen verantwortlich ist.

12. Computerprogramm nach Anspruch 8, 9, 10 oder 11, wobei der computerlesbare Programmcode ferner betreibbar ist zum Anzeigen der zuvor bestimmten Topologiekartierung und des identifizierten Hosts innerhalb der angezeigten Topologiekartierung (320).

13. Mit einem Netzwerk gekoppeltes Verarbeitungssystem zum Erkennen und Korrigieren eines Problems in dem Netzwerk, wobei das Verarbeitungssystem einen Prozessor umfasst, der betreibbar ist, um:
eine Ereignisbenachrichtigung von einer Einrichtung in einem Netzwerk (102) zu empfangen, wobei die Ereignisbenachrichtigung für ein Problem in dem Netzwerk bezeichnend ist (304);
eine Abfrage an eine Netzwerkflussinformationsdatenbank zu senden, in der Netzwerkflussinformationen über das Netzwerk gespeichert sind (310);
die abgefragten Netzwerkflussinformationen zu empfangen (312);
die empfangenen Netzwerkflussinformationen zu verarbeiten und einen überlasteten Übertragungsabschnitts in dem Netzwerk zu identifizieren (314); und
**dadurch gekennzeichnet, dass** der Prozessor dazu betreibbar ist, als Reaktion auf das Identifizieren des überlasteten Übertragungsabschnitts die empfangenen Netzwerkflussinformationen und eine zuvor bestimmte Topologiekartierung des Netzwerks zu untersuchen (316) und einen Host, der das Problem in dem Netzwerk verursacht, automatisch zu identifizieren (318);
wobei der Prozessor ferner dazu betreibbar ist, automatisch eine zum Korrigieren des Problems durchzuführende Aktion einzuleiten (322), wobei der computerlesbare Code dazu eingerichtet ist, den Betrieb des identifizierten Hosts in dem Netzwerk einzuschränken.

14. Verarbeitungssystem nach Anspruch 13, wobei der Prozessor dazu betreibbar ist, allen Datenverkehr an den oder von dem Host oder zwischen einem Paar Hosts einzuschränken oder zu blockieren und/oder eine Bandbreite für den Host abzusenken.

## Revendications

1. Procédé automatisé de localisation d'encombrements et de dérangements d'un réseau pour utilisation dans un réseau (102), le procédé comprenant :
la réception d'une notification d'événement d'un dispositif dans un réseau, la notification d'événement étant indicative d'un problème dans le réseau (304) ;
l'interrogation d'une base de données d'informations de flux de réseau stockant des informations de flux de réseau sur le réseau (310) ;
la réception des informations de flux de réseau interrogées (312) ;
le traitement des informations de flux de réseau reçues et d'identification d'un lien encombré du réseau (314) ; et
**caractérisé en ce que** le procédé comprend en outre,
en réponse à l'identification du lien encombré, l'examen des informations de flux de réseau reçues et d'un mappage topologique antérieurement déterminé du réseau (316), l'identification automatique d'un hôte provoquant le problème dans le réseau (318) et l'initiation automatique d'une action à effectuer pour corriger le problème, l'action comprenant la restriction du fonctionnement de l'hôte identifié dans le réseau.

2. Procédé selon la revendication 1, comprenant la restriction ou le blocage de tout le trafic vers l'hôte et en retour ou entre une paire d'hôtes et/ou la réduction de la largeur de bande pour l'hôte.

3. Procédé selon la revendication 1 ou 2, comprenant en outre la réception d'une pluralité de notifications d'événements d'un ou plusieurs dispositifs dans le réseau sur une période de temps prédéterminée.

4. Procédé selon la revendication 3, comprenant en outre la corrélation de la pluralité de notifications d'événements et le détermination d'un événement causal principal responsable de la génération de la pluralité de notifications d'événements.

5. Procédé selon la revendication 4, dans lequel la corrélation comprend en outre un dépistage de trajets.

6. Procédé selon l'une quelconque des revendications précédentes, comprenant en outre l'affichage du mappage topologique antérieurement déterminé de l'hôte identifié dans le mappage topologique affiché (320).

7. Procédé selon l'une quelconque des revendications précédentes, dans lequel les informations de flux de réseau comprennent l'une de données IPFIX et de données NETFLOW.

8. Programme d'ordinateur mis en oeuvre sur un support lisible par ordinateur et susceptible d'être exécuté par un processeur dans un dispositif, le programme d'ordinateur comprenant un code de programme lisible par ordinateur pour :
recevoir une notification d'événement d'un dispositif dans un réseau (102), la notification d'événement étant indicative d'un problème dans le réseau (304) ;
envoyer une interrogation à une base de données d'informations de flux de réseau stockant des informations de flux de réseau sur le réseau (310) ;
recevoir les informations de flux de réseau interrogées (312) ;
traiter les informations de flux de réseau reçues et identifier un lien encombré du réseau (314) ; et
**caractérisé en ce que** le programme d'ordinateur comprend en outre un code de programme lisible par ordinateur pour, en réponse à l'identification du lien encombré, examiner les informations de flux de réseau reçues et un mappage topologique antérieurement déterminé du réseau (316), et identifier automatiquement un hôte provoquant le problème dans le réseau (318), dans lequel le code de programme lisible par ordinateur étant en outre à même d'initier automatiquement une action à effectuer pour corriger le problème (322), le code de programme lisible par ordinateur configuré pour restreindre le fonctionnement de l'hôte identifié dans le réseau.

9. Programme d'ordinateur selon la revendication 8, dans lequel le programme lisible par ordinateur est à même de restreindre ou de bloquer tout le trafic vers l'hôte et en retour ou entre une paire d'hôtes et/ou de baisser la largeur de bande pour l'hôte.

10. Programme d'ordinateur selon la revendication 8 ou 9, dans lequel le code de programme lisible par ordinateur est en outre à même de recevoir une pluralité de notifications d'événements d'un ou plusieurs dispositifs dans le réseau sur une période de temps prédéterminée.

11. Programme d'ordinateur selon la revendication 10, dans lequel le programme lisible par ordinateur est en outre à même de corréler la pluralité de notifications d'événements et de déterminer un événement causal principal responsable de la génération de la pluralité de notifications d'événements.

12. Programme d'ordinateur selon la revendication 8, 9, 10 ou 11, dans lequel le code de programme lisible par ordinateur est en outre à même d'afficher le mappage topologique antérieurement déterminé de l'hôte identifié dans le mappage topologique affiché (320).

13. Système de traitement couplé à un réseau pour détecter et corriger un problème dans le réseau, le système de traitement comprenant un processeur, le processeur étant à même de :
recevoir une notification d'événement d'un dispositif dans un réseau (102), la notification d'événement étant indicative d'un problème dans le réseau (304) ;
envoyer une interrogation à une base de données d'informations de flux de réseau stockant des informations de flux de réseau sur le réseau (310) ;
recevoir les informations de flux de réseau interrogées (312) ;
traiter les informations de flux de réseau reçues et identifier un lien encombré dans le réseau (314) ; et
**caractérisé en ce que** le processeur est à même, en réponse à l'identification du lien encombré, d'examiner les informations de flux de réseau reçues et un mappage topologique antérieurement déterminé du réseau (316) et d'identifier automatiquement un hôte provoquant le problème dans le réseau (318) ;
le processeur étant en outre à même d'initier automatiquement une action à effectuer pour corriger le problème (322), le code lisible par ordinateur étant configuré pour restreindre le fonctionnement de l'hôte identifié dans le réseau.

14. Système de traitement selon la revendication 13, dans lequel le processeur est à même de restreindre ou de bloquer tout le trafic vers l'hôte et en retour ou entre une paire d'hôtes et/ou de baisser la largeur de bande pour l'hôte.
